# EUROPEAN PATENT SPECIFICATION

(11) **EP 3 709 332 B1**
(45) Date of publication and mention of the grant of the patent: **07.02.2024**
(21) Application number: 20162794.0
(22) Date of filing: 12.03.2020
(51) Int. Cl.: H01H 31/00

(54) **INSULATED SWITCHGEAR FOR ELECTRICAL POWER SYSTEMS**
ISOLIERTE SCHALTANLAGE FÜR ELEKTRISCHE LEISTUNGSSYSTEME
APPAREILLAGE DE COMMUTATION ISOLÉ POUR SYSTÈMES D'ALIMENTATION ÉLECTRIQUE

(30) Priority: 13.03.2019 GB 201903461
(43) Date of publication of application: 16.09.2020
(73) Proprietor: AS Tavrida Electric Export, 11415 Tallinn (EE)
(72) Inventor: KRAVCHENKO, Elena, 13616 Tallinn (EE); BARANJUK, Sergei, 13615 Tallinn (EE); PARFENENKO, Sergey, 11912 Tallinn (EE)
(74) Representative: FRKelly

(56) References cited:
- EP-A1- 3 367 408
- WO-A1-00/69041
- US-A1- 2007 261 946

## Description

### Field of the Invention

The present invention relates to switchgear for electrical power systems. The invention relates particularly to switchgear for medium voltage (MV) electrical power systems.

### Background to the Invention

There are three conventional types of MV switchgear namely, solid insulated switchgear (SIS), gas insulated switchgear (GIS) and Air insulated switchgear (AIS).

SIS consists of an insulation monoblock that incorporates a circuit breaker, an isolating switch and an earthing switch. The monoblock is usually made from solid insulating material such as cast resin, bulk mold composite (BMC) or sheet mold composite (SMC). In the event of a failure, this type of switchgear offers little or no possibility for replacing or repairing any of its components without dismantling the complete monoblock structure from the switchgear enclosure. Moreover, it is not possible to repair any internal part of the monoblock, and so it is usually necessary to replace the entire SIS monoblock. This is costly and requires a lengthy outage time of the electricity supply.

Switchgear earthing can only be made through the circuit breaker, which is usually a vacuum circuit breaker. In the event of ingress of air into the vacuum interrupter (VI), it becomes inoperable in a closed state and the earthing of the switchgear becomes impossible. The operating mechanism of the circuit breaker is complex, consisting of many parts and linkages causing it to be the least reliable component of the switchgear. If it fails to operate, earthing also becomes impossible. To fix such a failure, the relevant electrical substation, usually consisting of several switchgear panels, must be de-energized and the circuit breaker is replaced as a complete monoblock. The consumers supplied by the whole substation experience a supply outage, while the electricity supply company bears high costs for repair.

SIS does not have an inspection window to allow visual conformation of a safety gap between live conductors and earthed conductors. Instead, a mechanical indicator is attached to the isolating switch. However, this arrangement does not ensure that the safety gap is present as the gap itself cannot be seen, and so the operator must trust the operation of the mechanical indicator.

In addition, the manufacturing cost of SIS is relatively high due to the complexity of the insulated parts and the need to integrate earthed screens into the insulation for electric field equalization.

GIS suffers from similar problems as SIS, while also requiring the use of gas that is harmful to the environment.

AIS overcomes the disadvantages outlined above due to the provision of three separate switching apparatuses (the circuit breaker, the isolating switch and the earthing switch) and the availability of inspection windows for the isolating switch and earthing switch. However, AIS is large, typically occupying a space three times as high as that required for SIS. In addition, AIS consists of a large number of insulators for busbars, circuit breakers, cable supports, earthing switches, partitions between the equipment for each phase, a large amount of copper conductors, and so on. This reduces overall reliability and increases the product manufacturing cost.

Furthermore, each of the three switchgear types (SIS, GIS and AIS) are dedicated to accommodating a specific type of circuit breaker, and have little or no flexibility to accept variety of voltage and current sensing devices.

In addition, each MV cable is connected to the switchgear panel using a bolt connection and insulated cable termination. If a cable breakdown occurs, the faulty cable must be disconnected from the switchgear and connected to a cable testing unit so that a high voltage (HV) may be applied to the cable to find the cable fault. When the cable is disconnected its insulation can be damaged, and to reconnect the cable a new cable termination should be used.

International PCT patent application WO 00/69041 discloses a vacuum switch comprising a vacuum container that houses a main circuit breaker and a grounding switch. An isolating switch is housed in another container that is filled with insulating liquid or gas and has a window through which the contacts of the isolating switch can be observed.

It would be desirable to provide switchgear that mitigates at least some of the problems outlined above.

### Summary of the Invention

From a first aspect the invention provides a switching apparatus as claimed in claim 1, for electrical power systems.

Preferably, the body of the first support structure is shaped and dimensioned to provide a respective compartment for housing at least part of the respective switch device. Preferably, an end part of each switch device comprises first and second switch contacts that are actuatable between an open state, and a respective external electrical connector for each switch contact, and wherein at least said end part of each switch device is housed in the respective compartment of the first support structure.

The respective compartment may be shaped and dimensioned to define a cavity around said at least part of the respective switch device.

The body of the first support structure advantageously includes a top portion segregating the, or each, compartment from each first terminal. The, or each, compartment is typically provided below said top portion, and the, or each, first terminal is provided on top of said top portion, wherein said top portion may comprise a substantially planar structure.

In preferred embodiments, the body of said first support structure comprises first and second outer side walls extending from said top portion, and wherein a bottom portion of said body is open, each compartment of the first support structure being defined between the top portion and said first and second outer side walls, and having an open bottom provided by said open bottom portion. Said body of said first support structure typically comprises at least one divider located between and disposed substantially parallel with said outer side walls to define two or more of said compartments between the outer side walls.

Preferably, the body of said first support structure has an open front face, and the, or each, compartment has an open front mouth provided by said open front face.

Typically, the top portion is substantially perpendicular with the outer side walls and, when present, the or each divider.

Preferably, the body of the second support structure is shaped and dimensioned to provide a respective compartment for housing the respective selector device.

Advantageously, the respective compartment is shaped and dimensioned to define a cavity around the respective selector device.

Advantageously, the body of the second support structure includes a bottom portion segregating the, or each, compartment from the, or each, second terminal. The, or each, compartment is typically provided above said bottom portion, and the, or each, second terminal is provided below said bottom portion, wherein said bottom portion may comprise a substantially planar structure.

In preferred embodiments, the body of said second support structure comprises first and second outer side walls extending from said bottom portion, and wherein a top portion of said body is open, each compartment of the second support structure being defined between the bottom portion and the first and second outer side walls, and having an open top provided by said open top portion.

Typically, said body of said second support structure comprises at least one divider located between and disposed substantially parallel with said outer side walls to define two or more of said compartments between said outer side walls.

Preferably, the body of said second support structure has an open front face, and the, or each, compartment has an open front mouth provided by said open front face.

Typically, the bottom portion is substantially perpendicular with the outer side walls and, when present, the or each divider.

In preferred embodiments, said first support structure includes a respective compartment for housing at least part of the respective switch device, and said second support structure includes a respective compartment for housing the respective selector device, and wherein, when the first and second support structures are in the assembled state, the respective corresponding compartments align with one another to form a respective composite compartment for receiving said respective at least part of the respective switch device and the respective selector device.

In respect of each set of first and second electrical terminals, the apparatus includes a respective third electrical terminal, and wherein, in said second state, the selector device connects the respective second terminal to the respective third terminal. The apparatus further includes a yoke for electrically connecting the respective third terminals together. The yoke is operable between a use state in which it engages with the third terminals and electrically connects them together, and a disengaged state in which the third terminals are not electrically connected together by the yoke and are exposed from the apparatus, and wherein, with the yoke in the use state, the third terminals are preferably electrically connected to electrical earth, conveniently by the yoke. Advantageously, the third terminals are exposed by the second support structure, preferably being arranged in a row.

In preferred embodiments, said yoke comprises a clamp that is operable to engage or disengage with said third terminals.

In preferred embodiments, each switch device comprises a circuit breaker, preferably a vacuum circuit breaker.

In preferred embodiments, at least part of each first terminal is exposed at a top surface of the apparatus, a respective cover being provided around the exposed first terminal, wherein the cover is preferably sleeve-like in shape, and may be formed from electrically insulating material. Preferably, the respective cover is shaped and dimensioned to define a gap around a electrical conductor, for example a busbar, connected in use to the respective first terminal.

From another aspect, the invention provides an electrical switchgear enclosure comprising at least one switching apparatus as claimed in claim 1, wherein the, or each, switching apparatus is located in said enclosure between a busbar compartment and a cable compartment, and wherein the body of the first support structure includes a top portion segregating the, or each, compartment for housing at least part of a respective switch device and corresponding selector device from the busbar compartment, and wherein the body of the second support structure includes a bottom portion segregating the, or each, compartment for housing at least part of a respective switch device and corresponding selector device compartment from the cable compartment.

The invention may be embodied as a switchgear panel for MV (medium voltage) electrical power systems.

Preferred embodiments of the invention provide cost effective multi-purpose switchgear with air and solid insulation.

### Brief Description of the Drawings

An embodiment of the invention is now described by way of example and with reference to the accompanying drawings in which:
Figure 1 is a perspective view of an electrical switching apparatus embodying one aspect of the invention;
Figure 2 is a sectioned perspective view of a first part of a multi-part support assembly of the switching apparatus of Figure 1;
Figure 3 is an end view of the switching apparatus of Figure 1;
Figure 4 is a side view of the switching apparatus of Figure 1;
Figure 5 is a sectioned side view of the switching apparatus of Figure 1 in which a selector device is shown in a service state;
Figure 6 is a sectioned side view of the switching apparatus of Figure 1 in which the selector device is shown in a non-service state;
Figure 7A is an exploded side view of the switching apparatus of Figure 1 accommodating a first type of switch device;
Figure 7B is an exploded side view of the switching apparatus of Figure 1 accommodating a second type of switch device;
Figure 7C is an exploded side view of the switching apparatus of Figure 1 accommodating a third type of switch device;
Figure 8 is a side view of a switchgear enclosure containing at least one instance of the switching apparatus of Figure 1; and

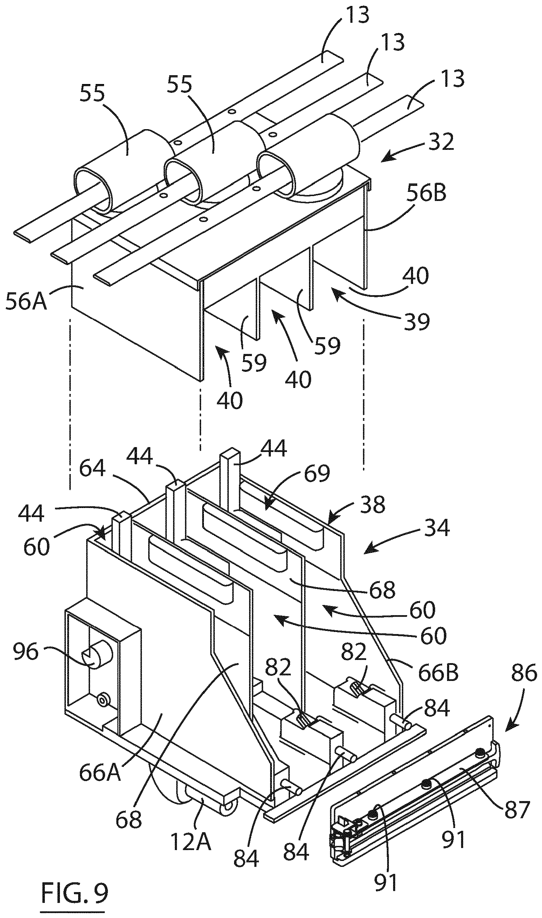

Figure 9 is an exploded perspective view of the multi-part support assembly that is part of the switching apparatus of Figure 1.

### Detailed Description of the Drawings

Referring now to the drawings there is shown, generally indicated as 10, an electrical switching apparatus embodying one aspect of the invention. In preferred embodiments, the switching apparatus 10 is of a type commonly referred to as switchgear. In preferred embodiments, the switching apparatus 10 is designed for use with medium voltage (MV) electrical power systems.

The apparatus 10 has at least two sets of first and second electrical terminals 12A, 12B for connecting the switching apparatus 10 one or more external circuit (not shown). Typically, each terminal 12A serves as in input terminal and each terminal 12B serves as an output terminal. In typical embodiments, each first terminal 12A is connectable to a respective electrical conductor 13 of an electrical power supply system (not shown), e.g. an MV electrical power system. In preferred embodiments, each electrical conductor 13 comprises a busbar. Each second terminal 12B is connectable to an electrical cable 15, or other conductor, for example an MV cable, for supplying electrical power to an electrical device (not shown) or other part of the system (not shown).. To this end, each terminal 12B may be incorporated into a standard cable connector, for example a type C connector according to European CENELEC EN 50180 and 50181 standards. In typical embodiments, there are three sets of terminals 12A, 12B (one for each phase of a multi-phase electrical supply) but there may alternatively be more or fewer sets of terminals as required by the application. Typically, the terminals 12A 12B are provided in pairs such that each terminal 12A has a corresponding terminal 12B, e.g. an input terminal 12A and a corresponding output terminal 12B. The apparatus 10 therefore comprises at least one pair of corresponding electrical terminals 12A, 12B, but typically three pairs of corresponding electrical terminals 12A, 12B.

For each pair of terminals 12A, 12B, the switching apparatus 10 comprises a respective switch device 14 coupled between the respective pair of terminals 12A, 12B and being operable to make or break an electrical connection between the respective terminals 12A, 12B. To this end, the switch device 14 comprises internal electrical contacts (not visible but located in part 20 of the switch device) at least one of which is movable with respect to the other between a closed state and an open state. One of the contacts is electrically connected to the terminal 12A. The other contact is electrically connectable to the terminal 12B by a selector device 16 as is described in more detail hereinafter. In the closed state the contacts make the electrical connection and in the open state they break it. In typical embodiments, the switch device 14 is responsive to detection of a fault condition (typically in an external circuit and detected by any convenient sensor) to operate from its closed state to its open state. The switch device 14 includes a respective external electrical connector 17, 19 for each of its contacts providing an external electrical connection to the respective contact. One of the connectors 17 is electrically connected to the terminal 12A, the other connector 19 being electrically connected to the selector device 16. Typically, one of the connectors 19 is located at an end of the switch device 14, particularly in cases where the contacts part 20 of the device 14 is located at said end. The other connector 17 is typically spaced apart from the connector 19 in the longitudinal direction, usually being located at the other end of the contacts part 20.

The switch device 14 further includes an actuator (not visible but located in part 18 of the switch device 14) for moving the contacts between the open and closed states. In preferred embodiments, the actuator has an actuation axis A1 - A1' that corresponds to the longitudinal axis of the switch device 14, and preferably also to the direction of movement of the contacts. The actuator 18 may by of any conventional type, typically comprising an electromagnetic actuator (which may also be referred to as a magnetic actuator) coupled to the switch contacts by a pulling insulator (not visible but located in part 24 of the switch device 14) or other suitable coupling device that is movable in response to operation of the actuator.

In preferred embodiments, the switch device 14 may comprise a circuit breaker, usually a medium voltage (MV) circuit breaker. The circuit breaker may be a vacuum circuit breaker (VCB), in which case the contacts are included in a vacuum interrupter 20. In the following description it is assumed that the switch device 14 is a VCB but it will be understood that the invention is not limited to this, and that the same or similar description applies to other types of switch device as would be apparent to a skilled person.

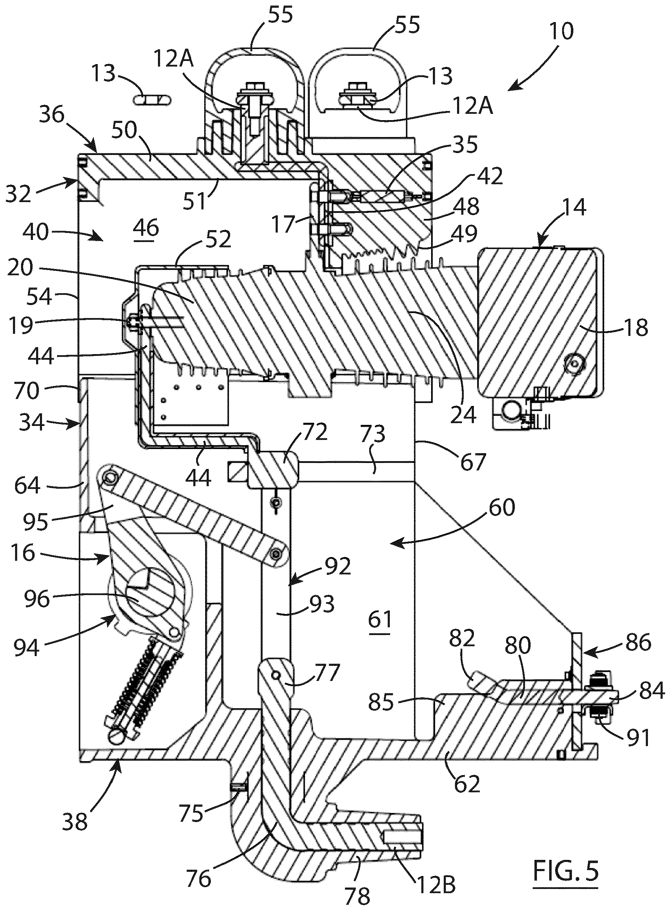

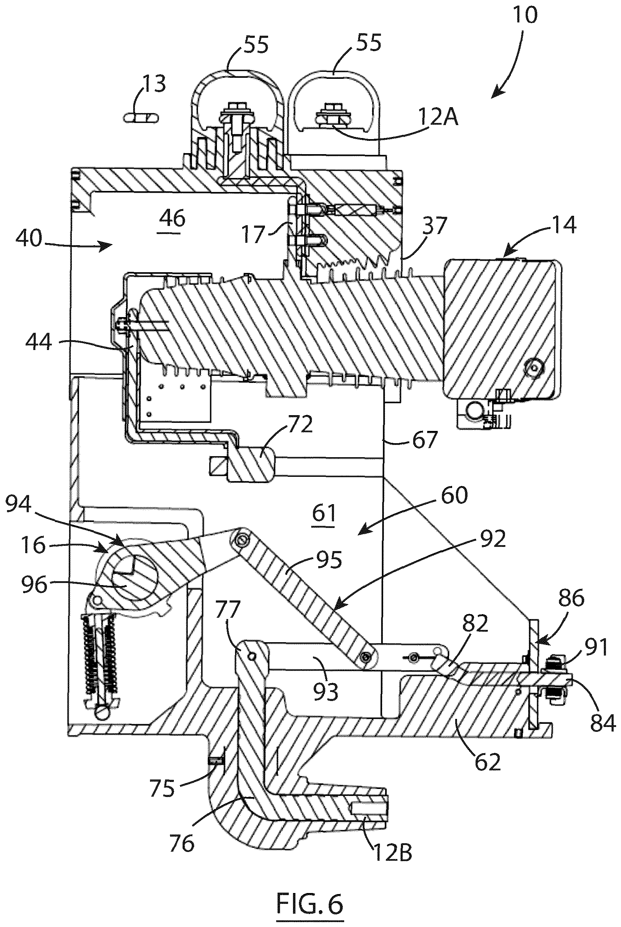

A respective selector device 16 couples the respective switch device 14 to the respective terminal 12B, and is operable to selectably connect the respective switch contact 19 to the terminal 12B. The selector device 16 is operable to adopt a service state (Figure 5) and a non-service state (Figure 6). The selector device 16 and VCB 14 are connected in series between the terminals 12A, 12B. With the selector device 16 in the service state, the VCB 14 is connected between the terminals 12A, 12B, an electrical connection being made or broken between the terminals 12A, 12B depending on whether the VCB 14 is closed or open respectively. With the selector device 16 in the non-service state, the terminal 12B is electrically isolated from the terminal 12A. As is described in more detail hereinafter, when the selector device 16 is in the non-service state, the respective terminal 12B is connected to a respective third terminal 84. Optionally, the respective third terminal 84 is connected to electrical ground.

The apparatus 10 is particularly suited for use with multi-phase electrical supply systems and so may be connected to a multi-phase supply line or bus bar that has a respective electrical conductor per phase (a three phase supply is assumed in the illustrated embodiment). The apparatus 10 therefore typically includes a respective switching unit per phase, each switching unit comprising a respective pair of first and second terminals 12A, 12B, between which are connected a respective VCB 14 (or other switch device) and selector device 16 as described above. In the illustrated embodiment, the apparatus 10 comprises three such switching units.

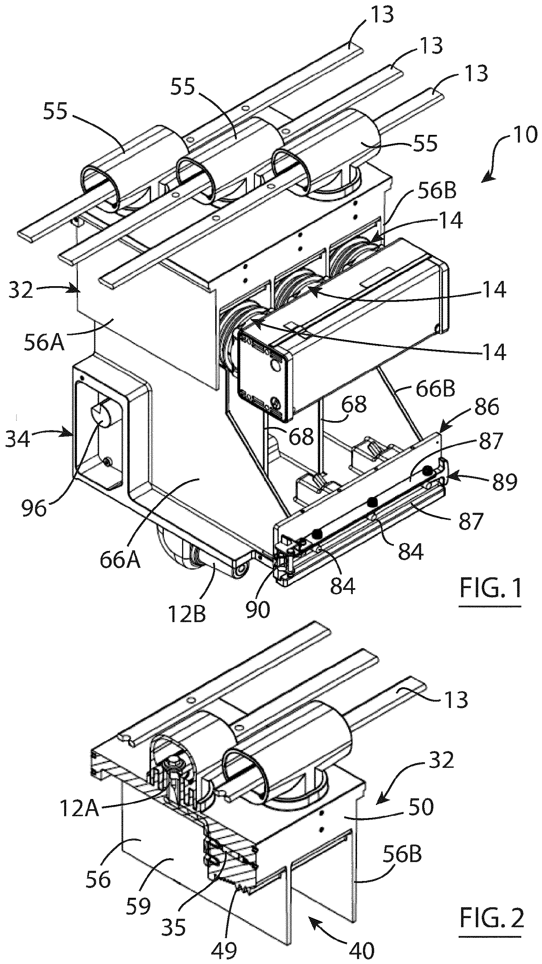

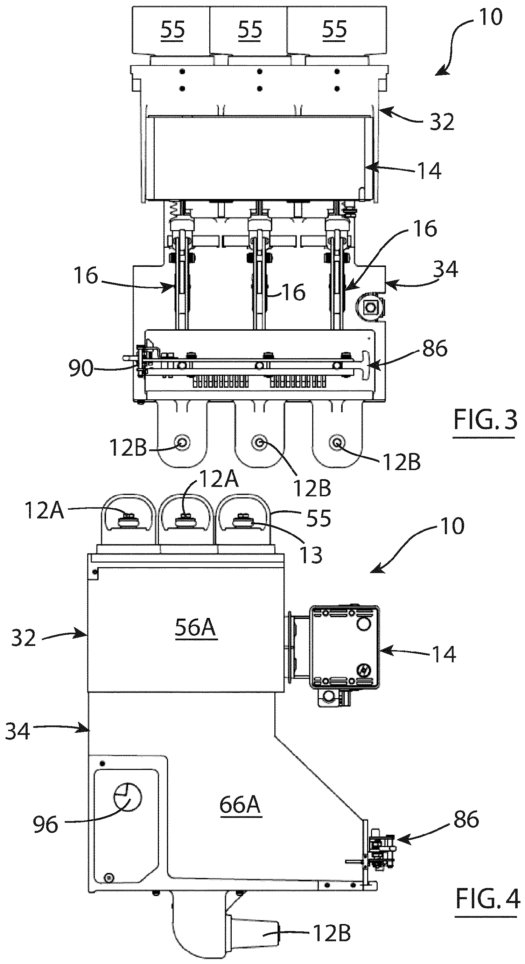

The apparatus 10 comprises a multi-part support assembly 30 comprising first and second separable support structures 32, 34. When in an assembled state (e.g. as shown in Figures 1, 3, 4, 5 and 6) the support structures 32, 34 together provide a housing for each VCB 14 and each selector device 16. In typical embodiments wherein the apparatus 10 comprises multiple switching units, it is preferred that the support structures 32, 34, when in the assembled state, provide a respective compartment for housing the respective VCB 14 and selector device 16 of each switching unit. Advantageously, the body 36, 38 of the respective support structure 32, 34 is formed from electrically insulating material, for example glass, ceramic, PVC or other plastics, rubber, resin, laminate or a composite material.

In preferred embodiments, the body 36 of the first support structure 32 is shaped and dimensioned to define at least one compartment 40 for receiving a respective VCB 14. In typical embodiments in which there are multiple switching units, the body 36 provides a respective compartment 40 for each switching unit. Each compartment 40 is shaped and dimensioned to receive at least part of the respective VCB 14 of the respective switching unit. Preferably, the compartment 40 is shaped and dimensioned to house at least the switch connectors 17, 19, typically at least the end of the VCB 14 that includes the connectors 17, 19 and the contacts part 20. In the illustrated embodiment, the compartment 40 is shaped and dimensioned to also house the part 24 of the VCB 14 (or at least most of part 24). In preferred embodiments, the arrangement is such that all or part of the end of the VCB 14 that comprises the actuating mechanism 18 is located outside of the compartment 40.

Each compartment 40 includes an electrical connector 42 for connection with the respective connector 17 of the VCB 14 when the VCB 14 is installed in the compartment 40. An electrical connector 44 is also provided in the compartment 40 for connection with the respective connector 19 of the VCB 14. In preferred embodiments, the connector 44 is part of the second support structure 34 and extends into the compartment 40 of the first structure 32 when the structures 32, 24 are assembled. The VCB 14 may be held in position by its connection to the connectors 42, 44. Optionally, the VCB 14 may be supported by a switchgear enclosure 3 in which the apparatus 10 is installed in use.

In preferred embodiments, the compartment 40 is shaped and dimensioned to define a cavity 46 around at least part of the VCB 14 when the VCB 14 is installed in the compartment 40. The cavity 46 is preferably located around the end of the VCB 14 that includes the connectors 17, 19 and the contacts part 20. The cavity 46 may contain air. Optionally, the compartment 40 includes a block 48 of solid electrically insulating material located adjacent at least part of the VCB 14 when the VCB 14 is installed in the compartment 40. The insulating block 48 is preferably located adjacent the part 24 of the VCB 14 (or at least most of part 24). In preferred embodiments, the compartment 40 is configured such that the cavity 46 and the insulating block 48 are located above the VCB 14, i.e. between the VCB 14 and a top portion 50 of the support structure 32. The underside of the top portion 50 conveniently provides the top surface of each compartment 40. In preferred embodiments, each compartment 40, and therefore the support structure 32, is open at its bottom face 39 (opposite the top portion 50). The top portion 50 may be substantially planar in shape.

In preferred embodiments, the connectors 42, 44, 17, 19 are located in the cavity 46 are at least partly surrounded by air, which provides insulation. In the illustrated embodiment, the connector 44 may be located against or partly embedded in solid insulation, for example as provided by block 48.

The required creepage distance between conductive parts can be obtained by the shape and dimensions of the surfaces of the VCB 14 and/or the compartment 40 as required. Optionally, an insulating hood 52 may be provided over the connector 19. The shape and dimensions of the hood 19 may be selected to provide a required creepage distance. The surface of the insulating block 48 may be shaped and dimensioned to provide a required creepage distance, In particular the underside 49 of the insulation block 48 may be shaped to define ribs or other formations for this purpose.

In preferred embodiments, the connector 44 projects into the cavity 46 when the support structures 32, 34 are assembled, typically via the open ended bottom portion, preferably such that a free end of the connector 44 is spaced apart from the top portion 50. The connector 44 is preferably spaced apart from a rear face 54 of the compartment 40, and preferably also from the side walls 56 of the compartment 40. The rear face 54 is open in the illustrated embodiment but may be closed or partly open in alternative embodiments. The connector 44 is preferably surrounded by the cavity 46. The connector 44 is located with respect to the cavity 46 such that it can be connected to the switch connector 19, which in typical embodiments is located at the end (usually at the tip) of the VCB 14. As a result, in preferred embodiments, when the switch connector 19 is connected to the connector 44, at least the end of the VCB 14 is located in the cavity 46 and is spaced apart from the walls 56 and top surface 51 of the compartment 40. Since the bottom of the compartment 40 is preferably open, the VCB is exposed to a corresponding compartment 60 the support structure 34 as is described in more detail hereinafter.

Preferably, the connector 42 projects into the cavity 46 from the top portion 50. The connector 42 may be located at, and optionally seated against or partially embedded in, a front wall 57 of the cavity 46. The front wall 57 may be provided by a rearward surface of the insulating block 48. The connector 42 is electrically connected to the respective terminal 12A. To this end, a portion of the connector 42 may be embedded in the top portion 50 and connect with a portion of the terminal 12A that is also embedded in the top portion 50.

Each compartment 40 is defined by the top portion 50 and respective side walls 56, which preferably extend substantially perpendicularly from the top portion 50. In preferred embodiments, the body 36 of the first support structure 32 comprises the top portion 50 and spaced apart outer side walls 56A, 56B, with an open rear face 54 between the side walls 56A, 56B. Preferably, the top portion 50, rear face 54 and outer side walls 56A, 56B are each substantially planar in shape. Preferably, the top portion 50, rear face 54 and outer side walls 56A, 56B are arranged substantially orthogonally with respect to each other to form a substantially cuboid structure with an open front face 37 and an open bottom face 39. Typically at least one divider 59 is provided between the outer walls 56A, 56B to divide the support structure 32 into two or more compartments 40 (by serving as an inner side wall 56 of each adjacent compartment 40). Each divider 59 is typically parallel with the outer walls 56A, 56B and extends from the top surface 51. The divider(s) 59 also divide the open front face 37 into a respective open mouth for each compartment 40. When present, the insulation block 48 may project from the top portion 50 and may have a forward surface 49 that provides part of the front face 37 of the support structure 32. Advantageously, the VCB 14 can be inserted into and removed from the respective compartment 40, via the open front face 37 and/or the open bottom face 39 as is convenient.

In preferred embodiments, each terminal 12A is provided outside of the respective compartment 40, conveniently on, or adjacent, the upper surface of the top portion 50 of the support structure 32. Each terminal 12A may be embedded in the top portion 50, a portion of the terminal 12A being exposed for connection to a respective busbar 13. In typical embodiments, the apparatus 10 is configured for connection to busbars 13 that run perpendicularly to the longitudinal axis of the VCBs 14 (i.e. perpendicular to the front-to-rear direction of the apparatus 10, and the terminals 12A (or at least the exposed portion of each terminal 12A) may be arranged diagonally on the upper surface of the top portion 50 to facilitate connection of parallel busbars 13 to a respective terminal 12A associated with a respective switching unit.

Preferably, a respective cover 55 is provided around the exposed portion of each terminal 12A. The cover 55 is preferably sleeve-like in shape, and may be formed from any conventional electrically insulating material. The cover 55 is preferably removable to allow the respective busbar 13 to be connected to the respective terminal 12A. To this end, the cover 55 and the upper surface of the top portion 50 may be provided with mutually engagable connector parts or other formations that allow the cover 50 to be connected to, or removed from, the top portion 50 as required. When the busbar 13 is connected to the terminal 12A and the cover 55 is in place, the busbar 13 passes through the open ends of cover 55 so that the cover 55 extends around a portion of the busbar 13. The cover 55 is preferably dimensioned to define a gap between the inside surface of the cover 55 and the covered portion of the busbar 13. Advantageously, the cover 55 provides dielectric strength between the busbar 13 and a metal switchgear enclosure 3 in which it is typically incorporated in use. In typical embodiments, first and second parts of the respective busbar 13 are connected together, e.g. using a bolt or other fixing, at the respective terminal 12A within the cover 55. Advantageously, the gap defined by the cover 55 around the terminal 12A is large enough to receive a tool, e.g. a spanner, for connecting and disconnecting the busbar parts. The cover 55 may be shaped and dimensioned to provide a required creepage distance between conductive parts. Advantageously, solid insulation is not required around the busbars 13.

In preferred embodiments, the body 38 of the second support structure 34 is shaped and dimensioned to define at least one compartment 60 for receiving a respective selector device 16. In typical embodiments in which there are multiple switching units, the body 38 provides a respective compartment 60 for each switching unit. Each compartment 60 is shaped and dimensioned to receive the respective selector device 16 of the respective switching unit.

The body 38 includes a respective compartment 60 for each compartment 40 of the first structure 32, the arrangement being such that when the support structures 32, 34 are in the assembled state, the respective corresponding compartments 40, 60 align with one another to form a composite compartment 40, 60 for receiving the VCB 14 an selector device 16 of the respective switching unit. In preferred embodiments, the compartment 60 is shaped and dimensioned to define a cavity 61 around the selector device 16. The cavity 61 may contain air.

Each compartment 60 is defined by a bottom portion 62 and respective side walls 66, which preferably extend substantially perpendicularly from the bottom portion 62. In preferred embodiments, the body 38 of the second support structure 34 comprises the bottom portion 62 and spaced apart outer side walls 66A, 66B, with a rear face 64 extending between the side walls 66A, 66B. The rear face 64 is closed or partly closed in preferred embodiments, but may alternatively be open. Preferably, the bottom portion 62, rear face 64 and outer side walls 66A, 66B are each substantially planar in shape. Preferably, the bottom portion 62, rear face 64 and outer side walls 66A, 66B are arranged substantially orthogonally with respect to each other to form a substantially cuboid structure with an open front face 67 and an open top face 69. Typically at least one divider 68 is provided between the outer walls 66A, 66B to divide the support structure 34 into two or more compartments 60 (by serving as an inner side wall of each adjacent compartment 60). Each divider 68 is typically parallel with the outer walls 66A, 66B and extends from the bottom portion 62. The divider(s) 68 also divide the open front face 67 into a respective open mouth for each compartment 60. The topside of the bottom portion 62 conveniently provides the bottom surface of each compartment 60. In preferred embodiments, each compartment 60, and therefore the support structure 34, is open at its top face (opposite the bottom portion 62).

In preferred embodiments, when the support structures 32, 34 are in the assembled state, they fit together such that the first support structure 32 is supported by the second support structure 34 (or vice versa). To this end, the support structures 32, 34 may be provided with any suitable inter-engagable formations. For example, the bottom of the first support structure 32 may be provided with a lip 70 around all or part of its periphery which engages with the top (e.g. the top of the rear face 64 and/or side walls 66A, 66B) of the second support structure 34 when the support structures 32, 34 are assembled. Typically, in the assembled state, the rear faces 54, 64 substantially align with each other, the outer side walls 56A, 56A substantially align with the side walls 66A, 66B, and the respective dividers 59, 68 substantially align with each other.

In preferred embodiments, each compartment 60 includes a respective one of the electrical connectors 44. The preferred arrangement is such that an end of the connector 44 projects out of the respective compartment 60, conveniently via the open top of the compartment 60. The connector 44 includes a first electrical contact 72, conveniently at its other end. The contact 72 is located in the respective compartment 60. The connector 44 may be supported within the compartment 60 by any convenient support means, for example a support structure 73 which may be supported by any of the walls or surfaces that form the compartment 60, as is convenient.

In preferred embodiments, each terminal 12B is provided outside of the respective compartment 60, conveniently on, or adjacent, the underside of the bottom portion 62 of the support structure 34. The terminal 12B may comprise or be electrically connected to an electrical connector 76, a portion 77 of which is located in the respective compartment 60. In the illustrated embodiment, each terminal 12B is embedded in a connector formation 78 that projects from and may be integrally formed with the bottom portion 62. Typically, the connector formation 78 and terminal 12B are configured for connection with a respective electrical power cable (not shown). The connector 76 is also embedded in the connector formation 78 and extends through the bottom portion 62 into the compartment 60.

A third electrical connector 80 is provided for each compartment 60, the connector 80 including an electrical contact 82 that may be located in the respective compartment 60 or may be accessible from the respective compartment 60, for example being located outside the compartment 60 adjacent or otherwise aligned with the open mouth of the compartment 60. Each connector 80 includes, or is electrically connected to, a third electrical terminal 84 that is exposed at the front of the apparatus 10. Conveniently, the contact 82 and terminal 84 are provided by opposite ends of the connector 80. The connector 80 may be supported by any suitable support means, for example a support structure 85 which may be provided on the bottom portion 62 or elsewhere on the structure 34.

The apparatus 10 includes a yoke 86 configured to electrically connect the respective third terminal 84 of each compartment to each other. The yoke 86 comprises one or more electrically conductive member 87 that, when the yoke 86 is in a use state, is in contact with each terminal 84. In the illustrated embodiment, the electrically conductive member(s) 87 are included in a clamp 89 that is operable to clamp each terminal 84 simultaneously. The preferred clamp 89 comprises first and second parallel bars, either or both of which comprises a respective electrically conductive member 87. To facilitate connection with the yoke 86, the third terminals 84 are exposed by the second support structure 34, preferably being arranged in a row.

Figures 1 to 7C show the yoke 86 in its use state in which the third terminal 84 of each compartment 60 are electrically connected together by the clamp 89. In a normal mode of the apparatus 10, the conductive member(s) 87 are connected to electrical earth (or ground), and so the terminals 84 and the respective contacts 82 are connected to electrical earth. Advantageously, the yoke 86 can be disengaged from the terminals 84 such that they are not electrically connected to each other. In the illustrated embodiment, the yoke 86 is pivotably coupled to the apparatus 10 by a hinge 90 that allows the yoke 86 to be moved between the use state (as illustrated) and a disengaged state (not illustrated) in which the terminals 84 are not electrically connected together. In the illustrated embodiment, the clamp 89 may be released to allow the yoke 86 to move between the use state and disengaged state, and tightened when in the use state. One or more releasable fasteners 91 may be provided for releasing and tightening the clamp 89 as required. In alternative embodiments the yoke 86 may be removed from the apparatus 10 in the disengaged state (instead of providing the hinge 90). When the yoke 86 is disengaged, the terminals 84 are exposed to allow connection of external equipment (not shown) for testing purposes, as is described in more detail below.

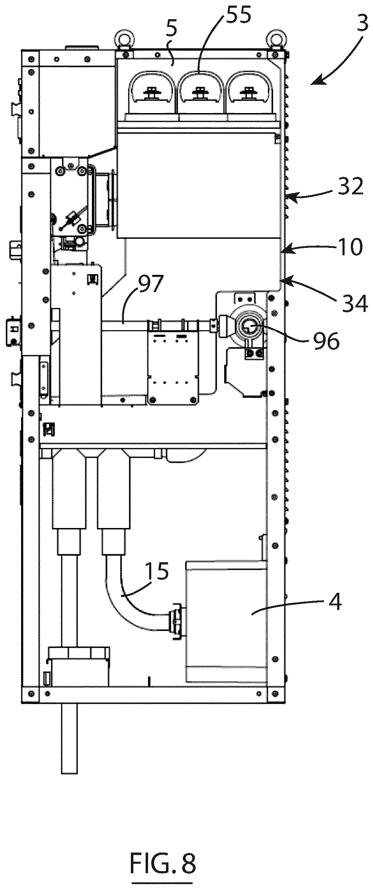

Each selector device 16 comprises a switching mechanism 92 that is operable to electrically connect the terminal 12B to either one of the contacts 72, 82 and to electrically isolate the terminal 12B from the other one of the contacts 82, 72. When the terminal 12B is connected to the contact 72, the switch device 14 is connected in series between the terminals 12A and 12B. This corresponds to the service state of the selector device 16 (and of the apparatus 10). When the terminal 12B is connected to the contact 82, the terminal 12B is connected to the terminal 84. This corresponds to the non-service state of the selector device 16 (and of the apparatus 10). The preferred switching mechanism 92 comprises an electrically conductive switch member 93 that is pivotably connected to the portion 77 of the electrical connector 76 and is pivotable between a first state (as illustrated in Figure 5) in which it contacts the contact 72 to effect the service state, and a second state (as illustrated in Figure 6) in which it contacts the contact 82 to effect the non-service state. The switching mechanism 92 comprises an actuator 94 for moving the switch member 93 between the first and second states. The actuator 94 may take any suitable form. In the illustrated embodiment, the actuator 94 comprises a mechanical linkage 95 coupled between the switch member 93 and a rotatable shaft 96, the arrangement being such that rotation of the shaft 96 in one direction causes the linkage 95 to move the switch member 93 from the first state to the second state, while rotation of the shaft 96 in the other direction causes the linkage 95 to move the switch member 93 from the second state to the first state. The actuator 94 may be operated by any convenient operating means, for example an operating tool 97 (Figure 8) that may be connected to the shaft 96 to allow a user to manually rotate the shaft 96. To facilitate coupling to the operating tool, a portion of the shaft 96 may be exposed externally of the support structure 34.

Advantageously, the compartment 60 is shaped and dimensioned to provide a cavity around the selector device 16, in particular around the contacts 72, 82, switch member 93 and connector 76. The cavity is typically air-filled in use.

The switching apparatus 10 is particularly suited for use as switchgear for electrical power systems, especially MV electrical power systems of types that may for example by used in industrial applications, electricity distribution or distributed electricity generation systems including renewable energy systems.

One or more instance of the apparatus 10 may be provided in an enclosure 3 (illustrated schematically in Figure 8), for example to provide a switchgear panel or cabinet. The apparatus 10 may be mounted inside the enclosure 3, typically on one or more of the enclosure walls. One or more doors or windows may be provided as required to allow an operator to access and/or view parts of the apparatus 10. Advantageously the enclosure 3 includes a window through which the state of the selector devices 16 can be seen. The enclosure 3 may include a compartment 4 below the apparatus 10 for the cables connected to the terminals 12B, and a compartment 5 above the apparatus 10 for receiving the busbars 13 or other electrical conductors. In cases where the enclosure accommodates more than one instance of the apparatus 10, they may be located side-by-side in the enclosure, each typically having a separate respective cable compartment below it and respective busbar compartment above it.

It will be apparent from the foregoing that, in preferred embodiments, the first support structure 32 can accept vacuum circuit breakers (VCB) of different types, and provides a combination of air insulation and solid insulation around at least part of the VCB. The first support structure 32 allows flat copper bars to be connected to the terminals 12A as main busbars. The structure provides any necessary creepage distances and does not require solid insulation for the main busbars. Advantageously the first support structure 32 provides segregation means between the first terminal(s) 12A (and therefore the busbar(s)) and the VCB(s), the segregation means advantageously comprising a solid insulation structure, i.e. the top portion 50 in preferred embodiments. When installed in a switchgear enclosure, the structure 32 provides the segregation means (in particular a solid insulation structure) between the busbar compartment and the VCB compartment. Each selector device 16 is located in a respective insulated compartment 60 provided by the second support structure 34. Advantageously the second support structure 34 provides the segregation means between the VCB(s) and the second terminals(s), the segregation means advantageously comprising a solid insulation structure, i.e. the bottom portion 62 in preferred embodiments. When installed in a switchgear enclosure, the structure 34 provides the segregation means (in particular a solid insulation structure) between the VCB compartment and the cable compartment.

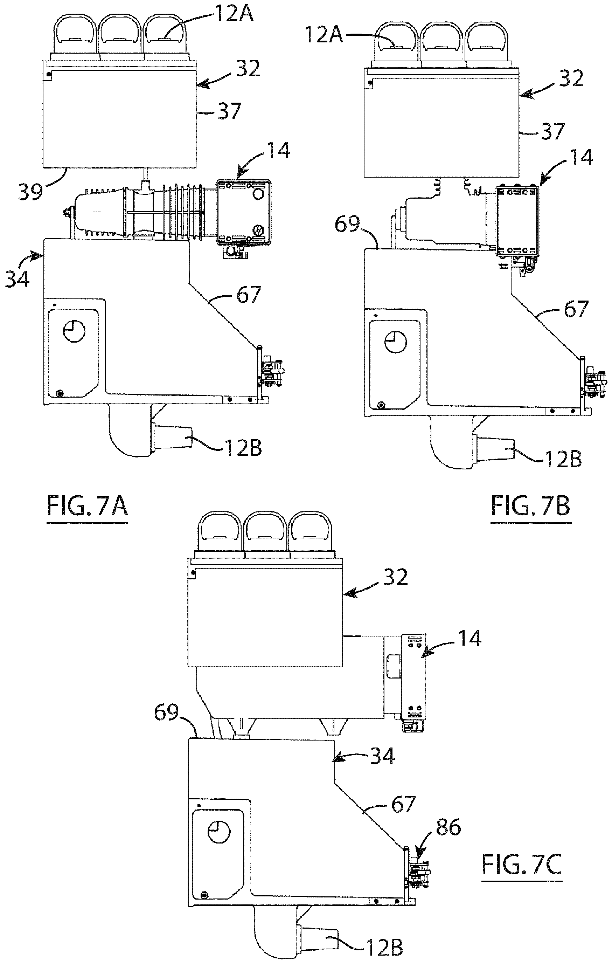

Referring in particular to Figures 7A to 7C, it is illustrated by way of example how three different types of VCB can be accommodated by the apparatus 10. Conveniently, the first and second support structures 32, 34 can be disassembled, to facilitate installation, removal and/or maintenance of the VCBs as required, and then assembled (as shown for example in Figure 1) for use.

When the apparatus 10 is in the service state, each input terminal 12A is connected to the respective output terminal 12B by the respective VCB 14 via the selector device 16. In typical applications, the VCB 14 adopts a normally closed state. Accordingly, the apparatus 10 supplies electrical power from the busbars 13 to the cables connected to the output terminals 12B. In the event of fault detection (which may be by any conventional fault detection means), the relevant VCB(s) 14 open to isolate the output terminals 12B from the input terminals 12A.

One or more current and/or voltage sensors may be provided at any convenient location within or externally of the apparatus 10 for monitoring and/or fault detection as required. In particular, the support structure 32 may include a respective voltage sensor 35 for measuring or otherwise sensing voltages at the terminal 12A. In the illustrated embodiment, the voltage sensor 35 comprises a capacitive divider coupled to the electrical connector 42. The support structure 34 may include a respective voltage sensor 75 for measuring or otherwise sensing voltages at the terminal 12B. In the illustrated embodiment, the voltage sensor 75 comprises a capacitive divider coupled to the electrical connector 76. Typically, one or more current or voltage sensors (not shown) are coupled to the terminals 12B, or to the cables that are connected in use to the terminals 12B. Any one or more of the voltage and/or current sensors may provide signals to a control unit (not shown) which may use the signals for the purpose of fault detection and operate the VCBs 14 accordingly.

When the apparatus 10 is in the non-service state, the output terminals 12B are, because of the state of the respective selector device 16, isolated from the input terminals 12A and connected to the respective third terminal 84. When the yoke 86 is in use, the terminals 12B may each connected to earth via the respective terminal 84, in which case the apparatus 10 may be said to be in an earthed state. When the apparatus 10 is in the non-service state with the yoke 86 disengaged (which may be referred to as the isolated or disconnected state), each of the terminals 12B is separately electrically accessible via the respective terminal 84. Accordingly, maintenance or testing operations may be carried out on any cable and/or other component(s) connected to the terminals 12B via the respective terminal 84, e.g. by connecting test equipment (not shown) to the terminal. Advantageously, this arrangement allows the testing or maintenance to be performed without having to disconnect the cable, or other component, from the respective terminal 12B. In typical applications where the apparatus 10 is installed in a switchgear enclosure, the testing or maintenance may be performed without having to open the cable compartment, which improves not only convenience but also safety for the user.

Preferred embodiments of the invention are versatile and are suitable for use in multiple applications including, but not limited to, ring main units, primary substations, secondary substations and industrial substations. The type of VCB used in the apparatus 10 may be selected depending on the application. The manufacturing cost of the apparatus 10 is typically at least 50% less than the cost of conventional comparable switchgear.

## Claims

1. A switching apparatus (10) for electrical power systems, the apparatus comprising at least two sets of first and second electrical terminals (12A, 12B), and further comprising, for each set of first and second terminals, a respective switch device (14) and respective selector device (16) connected in series between the respective first and second terminals,
wherein the respective switch device is operable to make or break an electrical connection between the respective first and second terminals,
and wherein the respective selector device is operable between a first state in which it electrically connects the respective switch device to the respective second terminal, and a second state in which it electrically isolates the respective switch device from the respective second terminal,
the apparatus further comprising first and second separable support structures (32, 34) that, in an assembled state, provide a respective compartment (40, 60) for housing at least part of a respective switch device and corresponding selector device, each of said first and second support structures having a body (36, 38) formed from electrically insulating material,
**characterized in that** in respect of each set of first and second electrical terminals, the apparatus includes a respective third electrical terminal (84), and wherein, in said second state, the selector device connects the respective second terminal to the respective third terminal, the apparatus further including a yoke (86) comprising one or more electrically conductive member (87) for electrically connecting the respective third terminals together, wherein the yoke is operable between a use state in which said one or more electrically conductive member engages with the third terminals and electrically connects them together, and a disengaged state in which the third terminals are not electrically connected together by the yoke and are exposed from the apparatus.

2. The switching apparatus of claim 1, wherein the body (36) of the first support structure (32) is shaped and dimensioned to provide a respective compartment (40) for housing at least part of the respective switch device (14), and wherein, preferably, an end part of each switch device comprises first and second switch contacts that are actuatable between an open state, and a respective external electrical connector (17, 19) for each switch contact, and wherein at least said end part of each switch device is housed in the respective compartment of the first support structure.

3. The switching apparatus of any preceding claim, wherein the respective compartment (40) is shaped and dimensioned to define a cavity (46) around said at least part of the respective switch device (14).

4. The switching apparatus of any preceding claim, wherein the body (36) of the first support structure (32) includes a top portion (50) segregating the, or each, compartment (40) from the, or each, first terminal (12A), and wherein, preferably, the, or each, compartment is provided below said top portion, and each first terminal is provided on top of said top portion, wherein said top portion may comprise a substantially planar structure, and wherein, optionally, the body of said first support structure comprises first and second outer side walls (56) extending from said top portion, and wherein a bottom portion of said body is open, each compartment of the first support structure being defined between the top portion and said first and second outer side walls, and having an open bottom provided by said open bottom portion, and wherein, optionally, said body of said first support structure comprises at least one divider (59) located between and disposed substantially parallel with said outer side walls to define two or more of said compartments between the outer side walls.

5. The switching apparatus of claim 4, wherein the body (36) of said first support structure (32) has an open front face, and the, or each, compartment (40) has an open front mouth provided by said open front face.

6. The switching apparatus of any one of claims 4 or 5, wherein the top portion (50) is substantially perpendicular with the outer side walls (56) and, when present, the or each divider (59).

7. The switching apparatus of any preceding claim, wherein the body (38) of the second support structure (34) is shaped and dimensioned to provide a respective compartment (60) for housing the respective selector device (16).

8. The switching apparatus of any preceding claim, wherein the respective compartment (40, 60) is shaped and dimensioned to define a cavity around the respective selector device.

9. The switching apparatus of any preceding claim, wherein the body (38) of the second support structure (34) includes a bottom portion (62) segregating the, or each, compartment (60) from each second terminal (12B), and wherein, optionally, the, or each, compartment is provided above said bottom portion, and the, or each, second terminal is provided below said bottom portion, wherein said bottom portion may comprise a substantially planar structure,

10. The switching apparatus of claim 9, wherein the body (38) of said second support structure (34) comprises first and second outer side walls (66) extending from said bottom portion (62), and wherein a top portion of said body is open, each compartment (60) of the second support structure being defined between the bottom portion and the first and second outer side walls, and having an open top (69) provided by said open top portion, and wherein, preferably, said body of said second support structure comprises at least one divider (68) located between and disposed substantially parallel with said outer side walls to define two or more of said compartments between said outer side walls, and wherein, optionally, the body of said second support structure has an open front face (67), and the, or each, compartment has an open front mouth provided by said open front face, and wherein, optionally, the bottom portion is substantially perpendicular with the outer side walls and, when present, the or each divider.

11. The switching apparatus of any preceding claim, wherein said first support structure (32) includes a respective compartment (40) for housing at least part of the respective switch device (14), and said second support structure (36) includes a respective compartment (60) for housing the respective selector device (16), and wherein, when the first and second support structures are in the assembled state, the respective corresponding compartments align with one another to form a respective composite compartment for receiving said respective at least part of the respective switch device and the respective selector device.

12. The switching apparatus of claim 1, wherein said one or more electrically conductive members are included in a clamp that is operable to engage or disengage with said third terminals.

13. The switching apparatus of any preceding claim, wherein each switch device (14) comprises a circuit breaker, preferably a vacuum circuit breaker.

14. The switching apparatus of any preceding claim, wherein at least part of each first terminal (12A) is exposed at a top surface of the apparatus (10), a respective cover (55) being provided around the exposed first terminal, wherein the cover is preferably sleeve-like in shape, and may be formed from electrically insulating material, and wherein, preferably, the respective cover is shaped and dimensioned to define a gap around a electrical conductor (13), for example a busbar, connected in use to the respective first terminal.

15. An electrical switchgear enclosure (3) comprising at least one switching apparatus (10) as claimed in any preceding claim, wherein the, or each, switching apparatus is located in said enclosure between a busbar compartment and a cable compartment, and wherein the body (36) of the first support structure (32) includes a top portion (50) segregating the, or each, compartment (40, 60) for housing at least part of a respective switch device and corresponding selector device from the busbar compartment, and wherein the body (38) of the second support structure (34) includes a bottom portion (62) segregating the, or each, compartment for housing at least part of a respective switch device and corresponding selector device compartment from the cable compartment.

## Patentansprüche

1. Schaltapparat (10) für elektrische Leistungssysteme, wobei der Apparat mindestens zwei Sätze von ersten und zweiten elektrischen Anschlüssen (12A, 12B) umfasst, und ferner für jeden Satz von ersten und zweiten Anschlüssen eine entsprechende Schaltvorrichtung (14) und eine entsprechende Auswahlvorrichtung (16) umfasst, die in Reihe zwischen den entsprechenden ersten und zweiten Anschlüssen geschaltet sind, wobei die jeweilige Schaltvorrichtung betreibbar ist, um eine elektrische Verbindung zwischen dem jeweiligen ersten und zweiten Anschluss herzustellen oder zu unterbrechen,
und wobei die jeweilige Auswahlvorrichtung zwischen einem ersten Zustand, in dem sie die jeweilige Schaltvorrichtung mit dem jeweiligen zweiten Anschluss elektrisch verbindet, und einem zweiten Zustand betreibbar ist, in dem sie die jeweilige Schaltvorrichtung von dem jeweiligen zweiten Anschluss elektrisch isoliert,
wobei der Apparat ferner erste und zweite trennbare Tragstrukturen (32, 34) umfasst, die in einem zusammengebauten Zustand ein jeweiliges Abteil (40, 60) zum Unterbringen mindestens eines Teils einer jeweiligen Schaltvorrichtung und einer entsprechenden Auswahlvorrichtung bereitstellen, wobei jede der genannten ersten und zweiten Tragstrukturen einen aus elektrisch isolierendem Material gebildeten Körper (36, 38) aufweist,
**dadurch gekennzeichnet, dass** die Vorrichtung in Bezug auf jeden Satz von ersten und zweiten elektrischen Anschlüssen einen jeweiligen dritten elektrischen Anschluss (84) beinhaltet, und wobei die Auswahlvorrichtung in dem zweiten Zustand den jeweiligen zweiten Anschluss mit dem jeweiligen dritten Anschluss verbindet, wobei die Vorrichtung ferner ein Joch (86) beinhaltet, das ein oder mehrere elektrisch leitende Elemente (87) zum elektrischen Verbinden der jeweiligen dritten Anschlüsse miteinander umfasst, wobei das Joch betreibbar ist zwischen einem Gebrauchszustand, in dem das eine oder die mehreren elektrisch leitenden Elemente mit den dritten Anschlüssen in Eingriff stehen und sie elektrisch miteinander verbinden, und einem gelösten Zustand, in dem die dritten Anschlüsse nicht durch das Joch elektrisch miteinander verbunden sind und von der Vorrichtung freiliegen.

2. Schaltapparat nach Anspruch 1, wobei der Körper (36) der ersten Tragstruktur (32) so geformt und dimensioniert ist, dass er ein entsprechendes Abteil (40) zum Unterbringen mindestens eines Teils der jeweiligen Schaltvorrichtung (14) bereitstellt, und wobei vorzugsweise ein Endteil jeder Schaltvorrichtung einen ersten und einen zweiten Schaltkontakt, die zwischen einem offenen Zustand betätigbar sind, und einen entsprechenden externen elektrischen Anschluss (17, 19) für jeden Schaltkontakt umfasst, und wobei mindestens das Endteil jeder Schaltvorrichtung in dem entsprechenden Abteil der ersten Tragstruktur untergebracht ist.

3. Schaltapparat nach einem der vorhergehenden Ansprüche, wobei das jeweilige Abteil (40) so geformt und dimensioniert ist, dass es einen Hohlraum (46) um den mindestens einen Teil der jeweiligen Schaltvorrichtung (14) herum definiert.

4. Schaltapparat nach einem der vorhergehenden Ansprüche, wobei der Körper (36) der ersten Tragstruktur (32) einen oberen Abschnitt (50) beinhaltet, der das oder jedes Abteil (40) von dem oder jedem ersten Anschluss (12A) trennt, und wobei vorzugsweise das oder jedes Abteil unterhalb des oberen Abschnitts bereitgestellt ist, und jeder erste Anschluss oben auf dem oberen Abschnitt bereitgestellt ist, wobei der obere Abschnitt eine im Wesentlichen ebene Struktur umfassen kann, und wobei der Körper der ersten Tragstruktur optional eine erste und eine zweite äußere Seitenwand (56) umfasst, die sich von dem oberen Abschnitt aus erstrecken, und wobei ein unterer Teil des Körpers offen ist, wobei jedes Abteil der ersten Tragstruktur zwischen dem oberen Teil und den ersten und zweiten äußeren Seitenwänden definiert ist und einen offenen Boden aufweist, der durch den offenen Bodenabschnitt bereitgestellt wird, und wobei der Körper der ersten Tragstruktur optional mindestens einen Teiler (59) umfasst, der sich zwischen den äußeren Seitenwänden befindet und im Wesentlichen parallel zu diesen angeordnet ist, um zwei oder mehr der Abteile zwischen den äußeren Seitenwänden zu definieren.

5. Schaltapparat nach Anspruch 4, wobei der Körper (36) der ersten Tragstruktur (32) eine offene Vorderseite aufweist und das oder jedes Abteil (40) eine von der offenen Vorderseite bereitgestellte offene Öffnung aufweist.

6. Schaltapparat nach einem der Ansprüche 4 oder 5, wobei der obere Abschnitt (50) im Wesentlichen senkrecht zu den äußeren Seitenwänden (56) und, falls vorhanden, zu dem oder den Teilern (59) steht.

7. Schaltapparat nach einem der vorhergehenden Ansprüche, wobei der Körper (38) der zweiten Tragstruktur (34) so geformt und dimensioniert ist, dass er ein entsprechendes Abteil (60) zum Unterbringen der jeweiligen Auswahlvorrichtung (16) bereitstellt.

8. Schaltapparat nach einem der vorhergehenden Ansprüche, wobei das jeweilige Abteil (40, 60) so geformt und dimensioniert ist, dass es einen Hohlraum um die jeweilige Auswahlvorrichtung herum definiert.

9. Schaltapparat nach einem der vorhergehenden Ansprüche, wobei der Körper (38) der zweiten Tragstruktur (34) einen Bodenabschnitt (62) beinhaltet, der das oder jedes Abteil (60) von jedem zweiten Anschluss (12B) trennt, und wobei optional das oder jedes Abteil oberhalb des Bodenabschnitts bereitgestellt ist und der oder jeder zweite Anschluss unterhalb des Bodenabschnitts bereitgestellt ist, wobei der Bodenabschnitt eine im Wesentlichen ebene Struktur umfassen kann.

10. Schaltapparat nach Anspruch 9, wobei der Körper (38) der zweiten Tragstruktur (34) eine erste und eine zweite äußere Seitenwand (66) umfasst, die sich von dem unteren Teil (62) aus erstrecken, und wobei ein oberer Teil des Körpers offen ist, wobei jedes Abteil (60) der zweiten Tragstruktur zwischen dem unteren Teil und der ersten und der zweiten äußeren Seitenwand definiert ist und eine offene Oberseite (69) aufweist, die durch den offenen oberen Teil bereitgestellt wird, und wobei vorzugsweise, der Körper der zweiten Tragstruktur mindestens einen Teiler (68) umfasst, der sich zwischen den äußeren Seitenwänden befindet und im Wesentlichen parallel zu diesen angeordnet ist, um zwei oder mehr der Abteile zwischen den äußeren Seitenwänden zu definieren, und wobei optional der Körper der zweiten Tragstruktur eine offene Vorderseite (67) aufweist und das oder jedes Abteil eine offene vordere Öffnung aufweist, die von der offenen Vorderseite bereitgestellt wird, und wobei optional der untere Teil im Wesentlichen senkrecht zu den äußeren Seitenwänden und, falls vorhanden, dem oder jedem Teiler ist.

11. Schaltapparat nach einem der vorhergehenden Ansprüche, wobei die erste Tragstruktur (32) ein jeweiliges Abteil (40) zum Unterbringen mindestens eines Teils der jeweiligen Schaltvorrichtung (14) beinhaltet und die zweite Tragstruktur (36) ein jeweiliges Abteil (60) zum Unterbringen der jeweiligen Auswahlvorrichtung (16) beinhaltet, und wobei, wenn sich die erste und die zweite Tragstruktur im zusammengebauten Zustand befinden, die jeweiligen korrespondierenden Abteile miteinander fluchten, um ein jeweiliges zusammengesetztes Abteil zum Unterbringen des jeweiligen mindestens einen Teils der jeweiligen Schaltvorrichtung und der jeweiligen Auswahlvorrichtung zu bilden.

12. Schaltapparat nach Anspruch 1, wobei das eine oder die mehreren elektrisch leitenden Elemente in einer Klemme enthalten sind, die betreibbar ist, um mit den dritten Anschlüssen in Eingriff zu kommen oder sie zu lösen.

13. Schaltapparat nach einem der vorhergehenden Ansprüche, wobei jede Schaltvorrichtung (14) einen Schutzschalter, vorzugsweise einen Vakuumschutzschalter, umfasst.

14. Schaltapparat nach einem der vorhergehenden Ansprüche, wobei mindestens ein Teil jedes ersten Anschlusses (12A) an einer oberen Oberfläche des Apparats (10) freiliegt, wobei eine entsprechende Abdeckung (55) um den freiliegenden ersten Anschluss herum bereitgestellt wird, wobei die Abdeckung vorzugsweise eine hülsenartige Form hat und aus elektrisch isolierendem Material gebildet werden kann, und wobei die entsprechende Abdeckung vorzugsweise so geformt und dimensioniert ist, dass sie einen Spalt um einen elektrischen Leiter (13), beispielsweise eine Sammelschiene, der im Gebrauch mit dem entsprechenden ersten Anschluss verbunden ist, definiert.

15. Elektrische Schaltanlageneinhausung (3), umfassend mindestens einen Schaltapparat (10) nach einem der vorhergehenden Ansprüche, wobei der oder jeder Schaltapparat in der Einhausung zwischen einem Sammelschienenabteil und einem Kabelabteil angeordnet ist, und wobei der Körper (36) der ersten Tragstruktur (32) einen oberen Abschnitt (50) beinhaltet, der das oder jedes Abteil (40, 60) zur Unterbringung mindestens eines Teils einer jeweiligen Schaltvorrichtung und einer entsprechenden Auswahlvorrichtung von dem Sammelschienenabteil trennt, und wobei der Körper (38) der zweiten Tragstruktur (34) einen unteren Abschnitt (62) enthält, der das oder jedes Abteil zum Unterbringen mindestens eines Teils einer jeweiligen Schaltvorrichtung und eines entsprechenden Auswahlvorrichtungsabteils von dem Kabelabteil trennt.

## Revendications

1. Appareil de commutation (10) pour systèmes d'alimentation électrique, l'appareil comprenant au moins deux ensembles de première et deuxième bornes électriques (12A, 12B), et comprenant également, pour chaque ensemble de première et deuxième bornes, un dispositif de commutation respectif (14) et un dispositif de sélection respectif (16) connectés en série entre les première et deuxième bornes respectives,
dans lequel le dispositif de commutation respectif peut fonctionner de manière à établir ou interrompre une connexion électrique entre les première et deuxième bornes respectives, et dans lequel le dispositif de sélection respectif peut fonctionner entre un premier état dans lequel il connecte électriquement le dispositif de commutation respectif à la deuxième borne respective, et un second état dans lequel il isole électriquement le dispositif de commutation respectif de la deuxième borne respective,
l'appareil comprenant également des première et seconde structures de support séparables (32, 34) qui, dans un état assemblé, fournissent un compartiment respectif (40, 60) pour loger au moins une partie d'un dispositif de commutation respectif et d'un dispositif de sélection correspondant, chacune desdites première et seconde structures de support ayant un corps (36, 38) formé à partir d'un matériau électroisolant, **caractérisé en ce que**, pour chaque ensemble de première et deuxième bornes électriques, l'appareil comporte une troisième borne électrique respective (84), et dans lequel, dans ledit second état, le dispositif de sélection connecte la deuxième borne respective à la troisième borne respective, l'appareil comportant également un étrier (86) comprenant un ou plusieurs éléments électriquement conducteurs (87) pour connecter électriquement les troisièmes bornes respectives entre elles, dans lequel l'étrier peut fonctionner entre un état d'utilisation dans lequel ledit un ou plusieurs éléments électriquement conducteurs viennent en prise avec les troisièmes bornes et les connectent électriquement entre elles, et un état désengagé dans lequel les troisièmes bornes ne sont pas connectées électriquement entre elles par l'étrier et sont exposées à l'extérieur de l'appareil.

2. Appareil de commutation selon la revendication 1, dans lequel le corps (36) de la première structure de support (32) est conformé et dimensionné pour former un compartiment respectif (40) destiné à loger au moins une partie du dispositif de commutation respectif (14), et dans lequel, de préférence, une partie d'extrémité de chaque dispositif de commutation comprend des premier et second contacts de commutation actionnables entre un état ouvert, et un connecteur électrique externe respectif (17, 19) pour chaque contact de commutation, et dans lequel au moins ladite partie d'extrémité de chaque dispositif de commutation est logée dans le compartiment respectif de la première structure de support.

3. Appareil de commutation selon une quelconque revendication précédente, dans lequel le compartiment respectif (40) est conformé et dimensionné pour définir une cavité (46) autour de ladite au moins une partie du dispositif de commutation respectif (14).

4. Appareil de commutation selon une quelconque revendication précédente, dans lequel le corps (36) de la première structure de support (32) comporte une partie supérieure (50) séparant le ou chaque compartiment (40) de la ou chaque première borne (12A), et dans lequel, de préférence, le ou chaque compartiment est prévu en dessous de ladite partie supérieure, et chaque première borne est prévue au dessus de ladite partie supérieure, dans lequel ladite partie supérieure peut comprendre une structure sensiblement plane, et dans lequel, éventuellement, le corps de ladite première structure de support comprend des première et seconde parois latérales externes (56) s'étendant à partir de ladite partie supérieure, et dans lequel une partie inférieure dudit corps est ouverte, chaque compartiment de la première structure de support étant défini entre la partie supérieure et lesdites première et seconde parois latérales externes, et ayant un fond ouvert prévu par ladite partie inférieure ouverte, et, dans lequel, éventuellement, ledit corps de ladite première structure de support comprend au moins un diviseur (59) situé entre et disposé sensiblement parallèlement auxdites parois latérales externes pour définir deux ou plus desdits compartiments entre les parois latérales externes.

5. Appareil de commutation selon la revendication 4, dans lequel le corps (36) de ladite première structure de support (32) a une face avant ouverte, et le ou chaque compartiment (40) a une embouchure avant ouverte prévue par ladite face avant ouverte.

6. Appareil de commutation selon l'une quelconque des revendications 4 ou 5, dans lequel la partie supérieure (50) est sensiblement perpendiculaire aux parois latérales externes (56) et, le cas échéant, au ou à chaque diviseur (59).

7. Appareil de commutation selon une quelconque revendication précédente, dans lequel le corps (38) de la seconde structure de support (34) est conformé et dimensionné pour prévoir un compartiment respectif (60) destiné à loger le dispositif de sélection respectif (16).

8. Appareil de commutation selon une quelconque revendication précédente, dans lequel le compartiment respectif (40, 60) est conformé et dimensionné pour définir une cavité autour du dispositif de sélection respectif.

9. Appareil de commutation selon une quelconque revendication précédente, dans lequel le corps (38) de la seconde structure de support (34) comporte une partie inférieure (62) séparant le ou chaque compartiment (60) de chaque deuxième borne (12B), et dans lequel, éventuellement, le ou chaque compartiment est prévu au-dessus de ladite partie inférieure, et la ou chaque deuxième borne est prévue au-dessous de ladite partie inférieure, dans lequel ladite partie inférieure peut comprendre une structure sensiblement plane.

10. Appareil de commutation selon la revendication 9, dans lequel le corps (38) de ladite seconde structure de support (34) comprend des première et seconde parois latérales externes (66) s'étendant à partir de ladite partie inférieure (62), et dans lequel une partie supérieure dudit corps est ouverte, chaque compartiment (60) de la seconde structure de support étant défini entre la partie inférieure et les première et seconde parois latérales externes, et ayant un sommet ouvert (69) prévu par ladite partie supérieure ouverte, et dans lequel, de préférence, ledit corps de ladite seconde structure de support comprend au moins un diviseur (68) situé entre et disposé sensiblement parallèlement auxdites parois latérales externes pour définir deux ou plus desdits compartiments entre lesdites parois latérales externes et dans lequel, éventuellement, le corps de ladite seconde structure de support a une face avant ouverte (67), et le ou chaque compartiment a une embouchure avant ouverte prévue par ladite face avant ouverte, et dans lequel, éventuellement, la partie inférieure est sensiblement perpendiculaire aux parois latérales externes et, le cas échéant, au ou à chaque diviseur.

11. Appareil de commutation selon une quelconque revendication précédente, dans lequel ladite première structure de support (32) comporte un compartiment respectif (40) destiné à loger au moins une partie du dispositif de commutation respectif (14), et ladite seconde structure de support (36) comporte un compartiment respectif (60) destiné à loger le dispositif de sélection respectif (16), et dans lequel, lorsque les première et seconde structures de support sont à l'état assemblé, les compartiments correspondants respectifs s'alignent l'un avec l'autre pour former un compartiment composite respectif pour recevoir ladite au moins une partie respective du dispositif de commutation respectif et du dispositif de sélection respectif.

12. Appareil de commutation selon la revendication 1, dans lequel lesdits un ou plusieurs éléments électriquement conducteurs sont inclus dans une pince qui peut fonctionner de manière à venir en prise avec lesdites troisièmes bornes ou à se désengager de celles-ci.

13. Appareil de commutation selon une quelconque revendication précédente, dans lequel chaque dispositif de commutation (14) comprend un disjoncteur, de préférence un disjoncteur à vide.

14. Appareil de commutation selon une quelconque revendication précédente, dans lequel au moins une partie de chaque première borne (12A) est exposée au niveau d'une surface supérieure de l'appareil (10), un couvercle respectif (55) étant prévu autour de la première borne exposée, dans lequel le couvercle a de préférence une forme de manchon, et peut être formé à partir d'un matériau électroisolant, et dans lequel, de préférence, le couvercle respectif est conformé et dimensionné pour définir un espace autour d'un conducteur électrique (13), par exemple une barre omnibus, connectée pendant l'utilisation à la première borne respective.

15. Enceinte d'appareillage de commutation électrique (3) comprenant au moins un appareil de commutation (10) selon une quelconque revendication précédente, dans laquelle le ou chaque appareil de commutation est situé dans ladite enceinte entre un compartiment de barre omnibus et un compartiment de câble, et dans laquelle le corps (36) de la première structure de support (32) comporte une partie supérieure (50) séparant le ou chaque compartiment (40, 60) destiné à loger au moins une partie d'un dispositif de commutation respectif et un dispositif de sélection correspondant du compartiment de barre omnibus, et dans laquelle le corps (38) de la seconde structure de support (34) comporte une partie inférieure (62) séparant le ou, chaque compartiment, destiné à loger au moins une partie d'un dispositif de commutation respectif et d'un compartiment correspondant de dispositif de sélection, du compartiment de câble.
